# EUROPEAN PATENT SPECIFICATION

(11) **EP 0 851 256 B1**
(45) Date of publication and mention of the grant of the patent: **16.11.2005**
(21) Application number: 97203449.0
(22) Date of filing: 06.11.1997
(51) Int. Cl.: G02B 6/44, H02G 1/08

(54) **Device, method and system for installing cables in a cable duct**
Verfahren, Vorrichtung und System zur Installation von Kabeln in einem Kabelschacht
Dispositif, méthode et système pour installer des câbles dans une conduite

(30) Priority: 24.12.1996 EP 96203704
(43) Date of publication of application: 01.07.1998
(73) Proprietor: Koninklijke KPN N.V., 9726 AE Groningen (NL)
(72) Inventor: Griffioen, Willem, 2264 XZ Leidschendam (NL)

(56) References cited:
- EP-A- 0 292 037
- PATENT ABSTRACTS OF JAPAN vol. 015, no. 284 (E-1091), 18 July 1991 & JP 03 098410 A (SUMITOMO ELECTRIC IND LTD), 24 April 1991, -& JP 03 098 410 A (SUMITOMO)
- PATENT ABSTRACTS OF JAPAN vol. 012, no. 280 (P-739), 2 August 1988 & JP 63 061207 A (SUMITOMO ELECTRIC IND LTD), 17 March 1988,
- PATENT ABSTRACTS OF JAPAN vol. 016, no. 483 (P-1432), 7 October 1992 & JP 04 172403 A (FURUKAWA ELECTRIC CO LTD:THE), 19 June 1992,

## Description

### BACKGROUND OF THE INVENTION

The present invention relates to a device for installing one or more cables in a cable duct. More in particular, the present invention relates to a device for installing a cable by exerting a mechanical force on the cable using a rotary element, such as a drive wheel.

European Patent Application EP-A-0292037 discloses a device for installing cables using drive wheels. In addition to the force exerted by the drive wheels, the Prior Art device may be used to feed fluid, such as air, as to cause a fluid flow through the cable duct over a cable to be installed in the direction of installation. The synergetic effect of the pushing force exerted by the drive wheels and the fluid drag exerted by the fluid on the cable has proven to be very effective, allowing cables to be installed over great lengths. The drive wheels of the Prior Art device are driven by a pneumatic motor powered by a compressor, thus requiring a compressor for each device present in an installation route. The European Patent Application EP-A-0292037 and its counterpart US Patents US-A-4,850,569 and US-A-4,934,662 are herewith incorporated by reference.

International Patent Application WO/97/04344, published on 6 February 1997, describes a device which also uses drive wheels to install a cable, while allowing to use the additional effect of fluid drag. This known device is designed so as to use the fluid passed through the duct for powering a pneumatic motor which drives the drive wheels. Thus many devices in a tandem arrangement can be powered using a single compressor.

Although the above-mentioned devices are very useful, they have several disadvantages. They are relatively expensive as they comprise numerous parts. As they are expensive, they have to be removed after the installation of a cable is completed. Furthermore, they are relatively inefficient as they require a relatively large amount of fluid (e.g. air) to be fed through the duct. Especially if use is made of the fluid drag, large amounts of fluid have to be passed through the duct at high speeds.

In abstract no. 284 (E-1091) of Patent Abstracts of Japan vol. 015, 18 July 1991 & JP 03 098410 A (Sumitomo Electric Ind Ltd), 24 April 1991, a technique is described for laying a light-weight flexible wire rod, such as an optical fibre. In this a windmill-like device driven by an airflow through a tube is used for propelling the wire rod through the tube via a pinch roller. However, a windmill-like device can extract energy from the airflow only to quite a limited extent.

### SUMMARY OF THE INVENTION

It is an object of the invention to overcome the above-mentioned and other disadvantages of the prior art and to provide a device for installing cables which is both inexpensive and efficient. It is a further object of the present invention to provide a device for installing cables which is capable of exerting a propelling force on the cable at a location remote from a fluid source.

In order to meet these and other objects the present invention provides a device for installing a cable in a duct, which comprises a housing provided with an entrance opening and an exit opening for passing a fluid flow and the cable through the housing from the entrance opening to the exit opening, and at least one propelling means for propelling the cable, which propelling means are mounted in the housing and include a rotary element provided with vanes for being powered directly by the fluid passed through the housing, and which is known as such from the above-mentioned Japanese abstract, has according to the present invention the characteristic of claim 1. In this it is used that a pump-like device which is based on a rotary element may also be applied in a reversed sense. I.e. not only the rotary element may be driven for imparting energy to a fluid, but also a fluid, flowing or pressurized, may actuate the rotary element of the pump-like device. In this way more energy can be derived from the fluid than in case of using a wind or water mill-like device.

Preferably, the vanes of the rotary element are arranged for directly propelling the cable. Thus no intermediary element need to be used, resulting in a minimal number of components.

### BRIEF DESCRIPTION OF THE DRAWINGS

Fig. 1 schematically shows a cable installation system comprising installation devices of the present invention.
Fig. 2 shows a cross-section of a first, symmetrical, embodiment of the device according to the present invention.
Fig. 3 schematically shows another cross-section of the embodiment of Fig. 2.
Fig. 4 schematically shows a second, asymmetrical embodiment of the device according to the present invention.
Fig. 5 schematically shows a third embodiment of the device according to the present invention.
Fig. 6 schematically shows a fourth embodiment of the device according to the present invention.
Fig. 7 schematically shows another cross-section of the embodiment of Fig. 6.
Fig. 8 schematically shows an fifth embodiment of the device according to the present invention.
Fig. 9 schematically shows another cross-section of the embodiment of Fig. 8.

### EXEMPLARY EMBODIMENTS

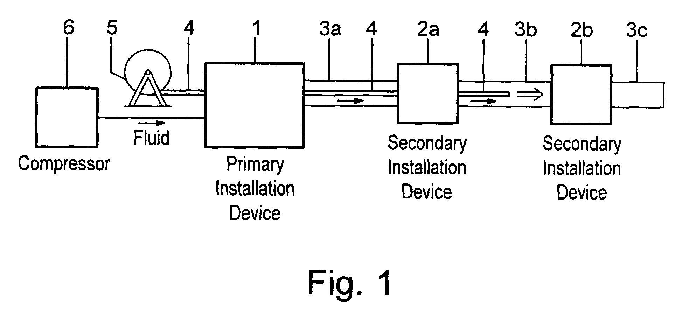

The cable installation system schematically shown by way of example in Fig. 1 comprises a primary installation device 1, secondary installation devices 2a and 2b, duct sections 3a, 3b and 3c, a cable 4, a cable reel 5, and a compressor 6.

The cable 4 is fed from the cable reel 5 into the primary installation device 1, which is preferably an installation device as disclosed in the European Patent Application EP-A-0292037. Fluid, preferably compressed air, is passed from the compressor 6 to the primary installation device 1. It will be understood that the compressor 6 may be replaced with another suitable source of pressurized fluid, e.g. a pressurized gas tank or a water container with a water pump.

The primary installation device 1 is used to guide the cable 4 and the fluid into the first duct section 3a, preferably while exerting a propelling force on the cable using e.g. drive wheels. If a propelling force is exerted on the cable using drive means, the fluid fed into the primary installation device 1 may be used to power the device 1, that is to energize its propelling means (e.g. drive wheels). Reference is made to EP-A-0292037. The cable 4 is thus preferably advanced through the duct section 3a using the combined effects of pushing force exerted by the propelling means (e.g. drive wheels) of the primary installation device 1 and the drag force exerted by the fluid passing over the surface of the cable 4. In the Figures, the fluid feed direction is indicated by a single arrow ( -> ) while the cable feed direction is indicated by a double arrow ( => ).

It will be understood that the primary installation device may be replaced by a suitable valve allowing both the cable and the fluid to be fed into the duct. The pushing force can in that case be exerted manually or by means of an external motor having suitable drive wheels. It is also possible to feed the fluid into the duct at a later stage, i.e. at a different place from where the cable is introduced into the duct. The duct, or one of the installation devices, may for this purpose be provided with a suitable fluid feed opening.

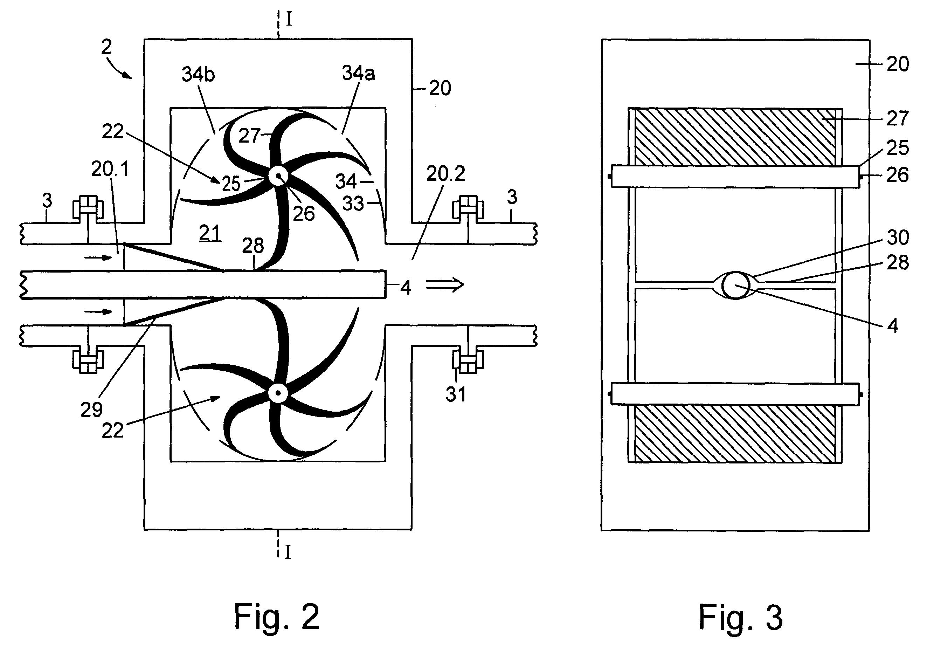

According to the present invention, the cable 4 is further propelled in the secondary installation device 2a, which is located between the duct sections 3a and 3b. Similarly, the secondary installation device 2b, located between the duct sections 3b and 3c, serves to further advance the cable 4 as soon as the cable reaches said device. The secondary devices of the present invention exert a propelling (pushing and pulling) force on the cable 4 and are powered by the fluid passed through the duct sections. The operation of the secondary installation devices 2a and 2b will now further be explained with reference to Figs. 2-11, in which similar parts are indicated by corresponding reference numerals.

A first embodiment of the secondary installation device 2 of the present invention is shown in Fig. 2, whereas Fig. 3 shows another cross-sectional view of the same embodiment, taken along the line I-I (connecting the pins 26) in Fig. 2. This embodiment comprises a symmetrical housing 20, attached to duct sections 3 by means of fastening means (e.g. nuts and bolts) 31. Preferably, the device 2 is removably attached to the duct sections and may be split in the longitudinal direction, thus allowing the device 2 to be removed after the installation of the cable 4 is completed. It may also be envisaged that the device may remain in place after the installation of the cable. In the latter case, the device 2 may be integral with (at least one of) the duct sections 3.

The housing 20 is shaped so as to provide a cavity through which the cable 4 and the fluid are fed (indicated in Fig. 2 by a double arrow and a single arrow respectively) from an entrance opening 20.1 to an exit opening 20.2. A widening 21 of the cavity accomodates propelling means comprising at least one rotary element 22 provided with vanes 27 arranged on an axis 26. The axis is perpendicular to the cable feed direction ( => ). The embodiment of Fig. 2 is symmetrical in that it comprises two rotary elements 22, symmetrically arranged with respect to the longitudinal axis of the housing 20 (in Fig. 2, said longitudinal axis coincides with the cable 4).

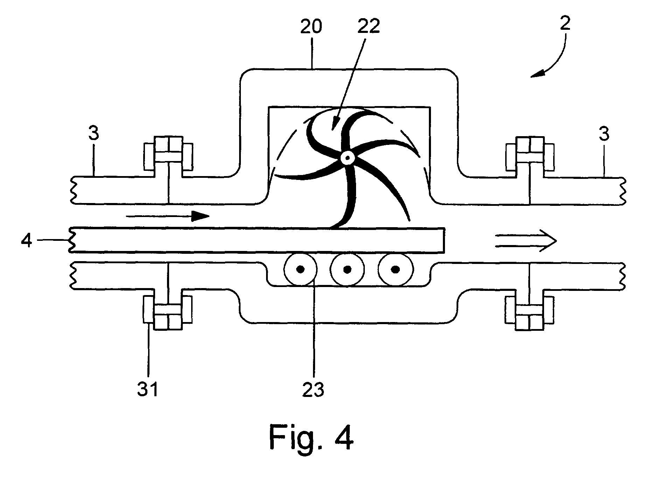

The embodiment shown in Fig. 4 is largely similar to the embodiment of Fig. 2. However, the device 2 of Fig. 4 is asymmetrical in that it is provided with only a single rotary element 22, the second rotary element being replaced with rollers 23. The rollers, which are preferably not driven, are passive cable guiding means, while the rotary elements 22 are active (i.e. propelling) cable guiding means.

In both embodiments described above the cable 4 is propelled (i.e. pushed forward in the cable feed direction) by the rotary elements 22, which are directly powered by the fluid flow. In addition to amplifying the propelling force of the fluid flow, the devices 2 guide the cable. It should be noted that in addition to the rollers 23 shown in Fig. 4, other rollers may be present to guide the cable 4 with minimal friction. Such additional rollers may be arranged either parallel or perpendicular to the rollers 23. In this respect it should further be noted that the cross-sectional views of Figs. 2 and 4 may be either in the horizontal or in the vertical plane: the rotary elements 22 may be arranged to the left and the right, or above and below the cable 4.

The rotary elements 22 of the embodiments shown in the figures FIGs 2-4 are constituted by flexible vanes 27 mounted on an axis or center body 25. The axis 25 is provided with a pin 26 which acts as center of rotation and which are supported by suitable bearings (not shown) in the housing 20. In the particular embodiments shown, the vanes 27 are curved and have a thickness which decreases towards the tips 28. This ensures that the vanes may be properly bent against the cable 4. The bending causes the vanes to be pressed against the cable, thus improving the contact between the cable and the rotary elements. The vanes 27 are preferably made of rubber or a suitable plastic material. Rubber has the additional advantage of providing sufficient friction between the tip 28 and the cable 4.

The embodiment of Fig. 2 is provided with an optional guiding member 29 which serves to guide the cable 4 towards the middle of the device 2. The guiding member preferably has a frusto-conical shape and may be made of metal or plastic.

As shown in Fig. 3, the vanes 27 are preferably each provided with a substantially curved cut-out 30 at their tips (edges) 28. These cut-outs serve to better close off the interior of the device so as to provide a minimal fluid leakage between the vanes 27, and to better contact the cable to provide sufficient friction. If the vanes are flexible enough to fold around the cable, the cut-outs 30 may be omitted. The tips 28 of the vanes 27 touch not only the cable 4, but also the inner wall of the housing 20 so as to close off the area 21, and mainly blocking the fluid flow. Consequently the fluid flow in the duct will accomodate to the speed of the vanes in the subsequent secondary installation devices. However, since the vanes during contact with the cable, make up a larger effective cross-sectional area for the fluid flow than the vanes which are not in contact with the cable, a net forward directed force will be exerted on the cable. The resilient deformation of the vanes 27 effectively closes off the area 21, but may also cause compression of fluid between the bent vanes 27. In order to prevent such compression, the housing 20 is provided with an additional inner wall or dish 33 having holes 34. The curved inner wall 33 separates the area 21 into two separate parts. The holes 34 allow fluid to pass behind the inner wall 33 from one section (closed off by vanes 27) to another section of the area 21, thus preventing compression of the fluid, but not allowing a backflow, e.g. from hole 34a to hole 34b (see FIG. 2). In some embodiments, however, a certain degree of leakage may be desired; firstly to maintain a sufficient fluid flow for drag on the cable in the duct; and secondly to allow the vanes of subsequent propelling means 22 to operate at the same (cable installation) speed. This will be necessary especially for an expanding airflow, since its speed will increase towards the end of the duct. Alternatively it is possible to use subsequent propelling means which are (at least substantially) leak-free, but in which the vanes have different effective cross-sectional areas with respect to the fluid flow.

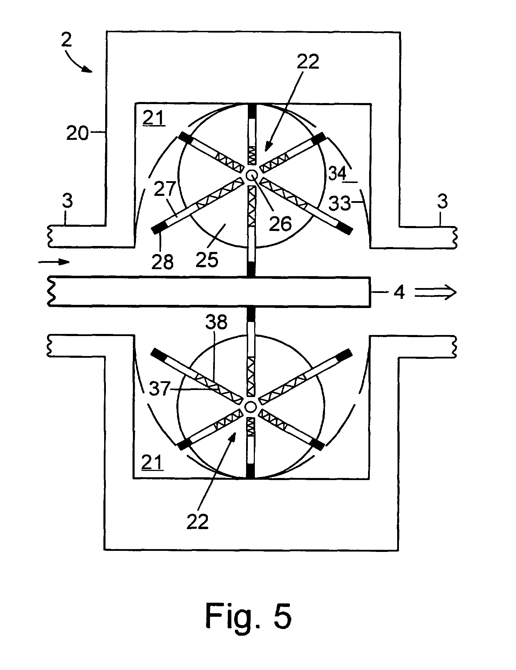

The embodiment of Fig. 5 has rigid vanes 27. However, such rigid vanes should have a variable length for the following reasons, as to achieve the desired pump working. Firstly, for providing a better contact between the cable 4 and the rotary elements 22; secondly to close off the inner area 21 of the device 2 (thus preventing a back flow of the fluid), and thirdly since the vanes during contact with the cable, should make up a larger effective cross-sectional area for the fluid flow than the vanes which are not in contact with the cable. Such a variable length is achieved by mounting the vanes 27 in slots 38 of an enlarged axis or center body 25. Springs 37, which are arranged in the slots 38 to push the vanes 27 outwards, provide the required resilience. Also in this embodiment, an inner wall 33 having holes 34 is provided to prevent fluid compression without any backflow. The rigid vanes 27 may be made of e.g. metal, but preferably have tips 28 made of e.g. rubber to provide more friction relative to the cable.

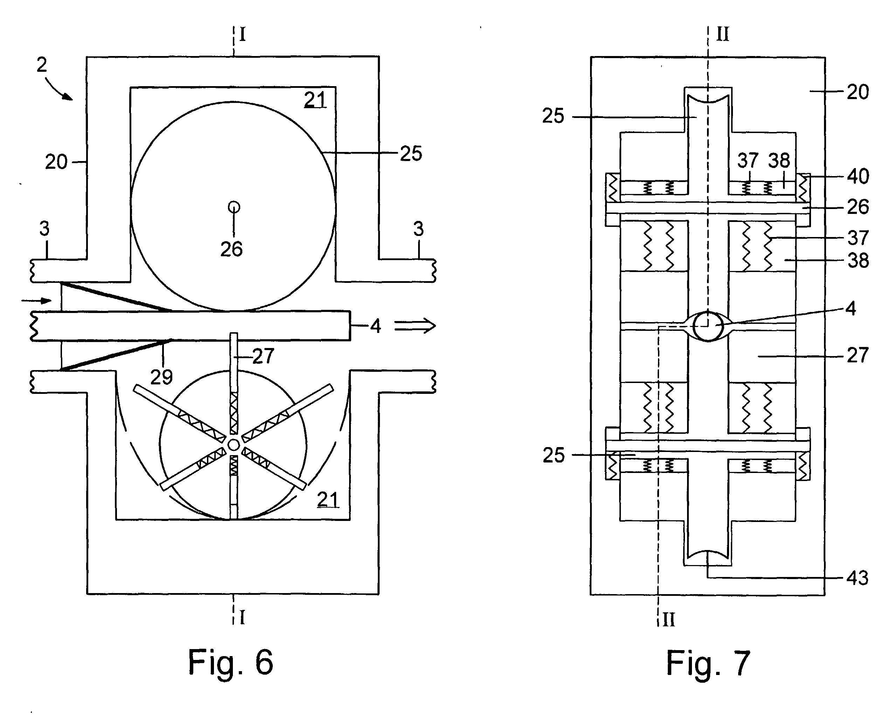

The embodiment shown in Figs. 6 and 7 differs from the preceding embodiments in that the axis or center body 25 is enlarged to form a drive wheel. This "axis" or drive wheel 25 has a middle section with a curved surface 43 for contacting the cable 4. In addition, the axis 25 has side sections having slots 38 in which the vanes 27 are positioned in a manner analogous to Fig. 5. It will be understood that the Figs. 6 and 7 are complimentary cross-sectional views, Fig. 7 showing a cross-section along the line I-I of Fig. 6 and Fig. 6 showing a cross-section along the line II-II of Fig. 7.

In this embodiment, the vanes 27 do not directly propel the cable 4. Instead, the vanes power the axis/wheel 25 which in turn propels the cable. Each rotary element 22 as a whole, comprising the axis 25 and the vanes 27, is still directly powered by the fluid. Springs 40 push the axis 25 against the cable so as to provide a good contact.

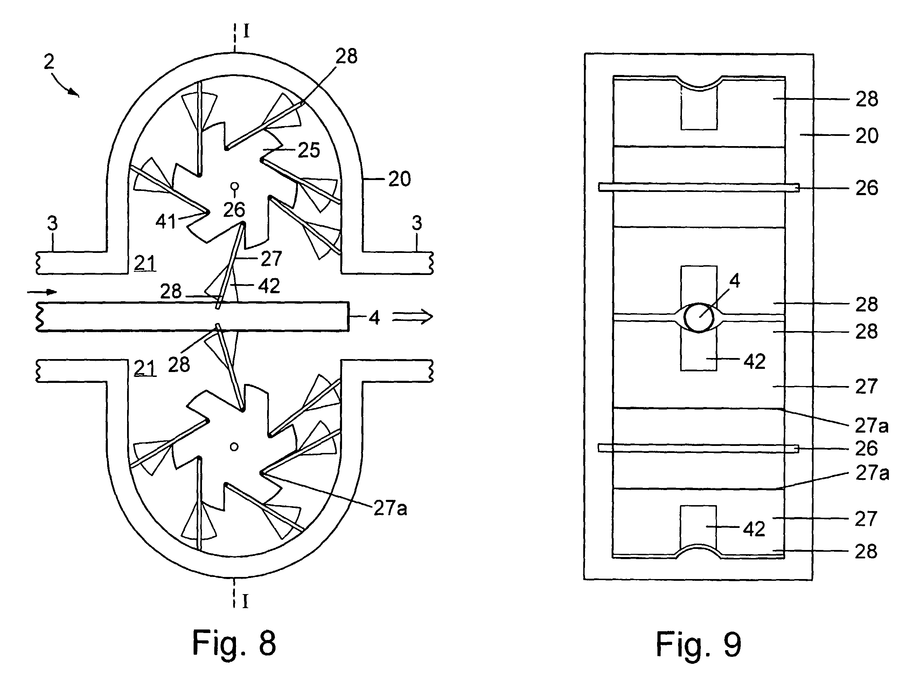

In the embodiment of Fig. 8 the vanes 27 are connected to the axis 25 by means of hinges 41. The shape of the axis 25 effectively limits the range of movement of the vanes 27 relative to the axis 27. The vanes 27 are advantageously provided with rubber wedges 42 at their tips 28 so as to provide a better contact with the cable 4.

In various embodiments a vane may lose contact with the cable before the next vane touches the cable. This results in a pulsating fluid flow and in a pulsating fluid pressure. The pulsating flow may be advantageous in many situations, e.g. in order to better overcome friction between the cable and the conduit. In fact, the number of vanes and their relative positions could be chosen to enhance a pulsating fluid flow.

The devices shown have a closed housing. In some instances, it may be advantageous to provide a greater pressure drop at an installation device, e.g. to increase the fluid speed. To this end, the device of the present invention may be provided with one or more decompression openings, i.e. for bleeding fluid.

The invention provides devices which provide a more efficient use of the fluid flow. The devices are passive in that they are, at least in most embodiments, not externally powered. Instead, they are powered by the fluid flow through the device. Although the devices are passive, a certain fluid flow may result in a desired force on the cable by choosing a proper ratio of the effective cross-sectional areas of secondary installation device and duct. Instead of enlarging the effective cross-sectional area of the vanes in a secondary installation device also a gearbox may be used, in principle.

The fluid flow direction and the cable feed direction will normally coincide, thus allowing a simple construction and taking advantage of the synergetic effect of pushing and fluid drag. However, a relatively simple gearbox may be used also for making the cable feed direction to be contrary to the fluid flow direction.

The devices of the present invention can also be used for installing pulling ropes.

It will thus be understood by those skilled in the art that the embodiments described above are given by way of example only and that many modifications and additions are possible without departing from the scope of the present invention.

## Claims

1. Device (2) for installing a cable (4) in a duct (3), the device comprising:
- a housing (20) provided with an entrance opening and an exit opening for passing a fluid flow and the cable (4) through the housing from the entrance opening to the exit opening, and
- propelling means for propelling the cable (4), which propelling means are mounted in the housing and include at least one rotary element (22) provided with vanes (27) for being powered directly by the fluid passed through the housing,
**characterized in that** an innerwall (33) of the housing and the vanes have been shaped and arranged for mainly blocking the fluid flow passed through the housing, in such a manner that the device acts in a pump-like manner.

2. Device according to claim 1, wherein the vanes (27) are flexible.

3. Device according to claim 1, wherein the vanes (27) are rigid and are provided with grooved tips (28).

4. Device according to claim 3, wherein a rotary element (22) includes springs (37) for exerting an outward force on the vanes (27).

5. Device according to any of the claims 1,--,4, further provided with springs (40) for pressing the rotary element (22) towards the cable (4).

6. Device according to any of the claims 1,--,5, further comprising a guiding member (29) for positioning the cable (4) with respect to the rotary element (22).

7. Device according to any of the preceding claims, wherein the vanes (27) of the rotary element are arranged for directly propelling the cable (4).

8. Device according to any of the claims 1,--,7, wherein the rotary element is coupled to a drive wheel which is in propelling engagement with the cable.

9. Device according to any of the claims 1,--,8, wherein the inner wall is provided with holes arranged as to prevent compression of the fluid without backflow during installation of a cable.

10. Method of installing a cable (4) by means of at least one device (2) according to any of the preceding claims, the method comprising the steps of:
- placing the at least one device (2) in a cable duct (3a, 3b),
- feeding a fluid into the duct using a primary installation device (1),
- feeding the cable (4) into the duct.

11. Method according to claim 10, wherein the fluid is compressed air.

12. Method according to claim 10 or 11, comprising the additional step of removing the at least one device (2) after the cable (4) is installed.

13. System for installing cables, the system comprising:
- duct sections (3a, 3b),
- at least one device (2) according to any of the claims 1,--,9,
- means (6) for providing pressurized fluid.

## Patentansprüche

1. Vorrichtung (2), um ein Kabel in einem Schacht (3) zu installieren, wobei die Vorrichtung umfasst:
- ein Gehäuse (20), ausgestattet mit einer Eintrittsöffnung und einer Austrittsöffnung, um einen Fluidstrom und das Kabel (4) durch das Gehäuse von der Eintrittsöffnung zu der Austrittsöffnung passieren zu lassen, und
- Vortriebsmittel, um das Kabel (4) vorzutreiben, wobei die Vortriebsmittel im Gehäuse befestigt sind und mindestens ein rotierendes Element (22) ausgestattet mit Schaufeln (27) beinhalten, um direkt vom Fluid, das durch das Gehäuse strömt, angetrieben zu werden,
**dadurch gekennzeichnet, dass** eine Innenwand (33) des Gehäuses und die Schaufeln so geformt und angeordnet sind, um hauptsächlich den Fluidstrom, der das Gehäuse passiert, in einer Weise zu blockieren, dass die Vorrichtung in einer pumpen-ähnlichen Weise arbeitet.

2. Vorrichtung nach Anspruch 1, bei der die Schaufeln (27) flexibel sind.

3. Vorrichtung nach Anspruch 1, bei der die Schaufeln (27) steif sind und mit geschlitzten Spitzen (28) ausgestattet sind.

4. Vorrichtung nach Anspruch 3, bei der ein rotierendes Element (22) Federn (37) beinhaltet, um eine nach aussen gerichtete Kraft auf die Schaufeln (27) zu bringen.

5. Vorrichtung nach einem der Ansprüche 1 bis 4, zusätzlich mit Federn (40), um das rotierende Element (22) gegen das Kabel (4) zu pressen, ausgestattet.

6. Vorrichtung nach einem der Ansprüche 1 bis 5, zusätzlich einen Führungskörper (29), um das Kabel (4) bezüglich des rotierenden Elements (22) zu positionieren, umfassend.

7. Vorrichtung nach einem der vorhergehenden Ansprüche, bei der die Schaufeln (27) des rotierenden Elementes derart angeordnet sind, um das Kabel (4) direkt vorzutreiben.

8. Vorrichtung nach einem der Ansprüche 1 bis 7, bei der das rotierende Element mit einem Antriebsrad verbunden ist, welches im Vortriebseingriff mit dem Kabel steht.

9. Vorrichtung nach einem der Ansprüche 1 bis 8, bei der die innere Wand mit Öffnungen ausgestattet ist, die so angeordnet sind, um eine Kompression des Fluids ohne Rückfluss während der Installation des Kabels zu verhindern.

10. Verfahren zum Installieren eines Kabels (4) mittels mindestens einer Vorrichtung (2) gemäss einem der vorstehenden Ansprüche, wobei das Verfahren die Schritte umfasst:
- Anordnen mindestens einer Vorrichtung (2) in einem Kabelschacht (3a, 3b),
- Zuführen eines Fluids in den Schacht mittels einer primären Installationsvorrichtung (1),
- Zuführen des Kabels (4) in den Schacht

11. Verfahren nach Anspruch 10, bei der das Fluid komprimierte Luft ist.

12. Verfahren nach Anspruch 10 oder 11, den zusätzlichen Schritt des Entfernens der mindestens einen Vorrichtung (2) umfassend nachdem das Kabel (4) installiert wurde.

13. System, um Kabel zu installieren, wobei das System umfasst:
- Schachtabschnitte (3a, 3b),
- mindestens eine Vorrichtung (2) gemäss einem der Ansprüche 1 bis 9,
- Mittel (6), um ein unter Druck stehendes Fluid bereitzustellen.

## Revendications

1. Dispositif (2) pour installer un câble (4) dans une conduite (3), le dispositif comprenant :
- un boîtier (20) pourvu d'une ouverture d'entrée et d'une ouverture de sortie pour le passage d'un écoulement de fluide et du câble (4) à travers le boîtier depuis l'ouverture d'entrée en direction de l'ouverture de sortie, et
- des moyens de propulsion pour propulser un câble (4), lesquels moyens de propulsion sont montés dans le boîtier et incluent au moins un élément rotatif (22) pourvu d'ailettes (27) destinées à être mues directement par le fluide traversant le boîtier,
**caractérisé en ce qu'**une paroi intérieure (33) du boîtier et les ailettes possèdent des formes agencées de manière à bloquer principalement l'écoulement de fluide traversant le boîtier, de telle sorte que le dispositif agit à la manière d'une pompe.

2. Dispositif selon la revendication 1, dans lequel les ailettes (27) sont flexibles.

3. Dispositif selon la revendication 1, dans lequel les ailettes (27) sont rigides et sont pourvues de pointes rainurées (28).

4. Dispositif selon la revendication 3, dans lequel un élément rotatif (22) inclut des ressorts (37) pour appliquer une force extérieure aux ailettes (27).

5. Dispositif selon l'une quelconque des revendications 1, ..., 4, équipé en outre de ressorts (40) pour presser l'élément rotatif (22) en direction du câble (4).

6. Dispositif selon l'une quelconque des revendications 1, ..., 5, comprenant en outre un élément de guidage (29) pour positionner le câble (4) par rapport à l'élément rotatif (22).

7. Dispositif selon l'une quelconque des revendications précédentes, dans lequel les ailettes (27) de l'élément rotatif sont agencées de manière à propulser directement le câble (4).

8. Dispositif selon l'une quelconque des revendications 1, ..., 7, dans lequel l'élément rotatif est couplé à une roue d'entraînement qui coopère, en effectuant une propulsion, avec le câble.

9. Dispositif selon l'une quelconque des revendications 1, ..., 8, dans lequel la paroi intérieure est formée de trous agencés de manière à empêcher une compression du fluide sans reflux au cours de l'installation d'un câble.

10. Procédé d'installation d'un câble (4) à l'aide d'au moins un dispositif (2) selon l'une quelconque des revendications précédentes, le procédé comprenant les étapes consistant à :
- placer le au moins un dispositif (2) dans une conduite à câbles (3a,3b),
- faire avancer un fluide dans la conduite en utilisant un dispositif d'installation primaire (1),
- faire avancer le câble (4) dans la conduite.

11. Procédé selon la revendication 10, selon lequel le fluide est de l'air comprimé.

12. Procédé selon la revendication 10 ou 11, comprenant l'étape additionnelle consistant à retirer le au moins un dispositif (2) après l'installation du câble (4).

13. Système pour l'installation de câbles, le système comprenant :
- des sections de conduite (3a,3b),
- au moins un dispositif (2) selon l'une quelconque des revendications 1, ..., 9,
- des moyens (6) pour délivrer un fluide sous pression.
